# EUROPÄISCHE PATENTANMELDUNG

(11) **EP 0 822 325 A2**
(43) Veröffentlichungstag der Anmeldung: **04.02.1998**
(21) Anmeldenummer: 97113192.5
(22) Anmeldetag: 31.07.1997
(51) Int. Cl.: F02B 27/02

(54) **Vorrichtung zum Steuern der Ansaugquerschnitte von Verbrennungsluft-Einlassleitungen von Brennkraftmaschinen**

(30) Priorität: 02.08.1996 DE 19631346
(71) Anmelder: AUDI AG, 85045 Ingolstadt (DE)
(72) Erfinder: Höfner, Dirk, 91809 Wellheim (DE); Ottowitz, Alfred, 85084 Reichertshofen (DE)

(57) **Zusammenfassung**

Bei einer Vorrichtung zum Steuern der Ansaugquerschnitte von Verbrennungsluft-Einlaßleitungen von Brennkraftmaschinen, insbesondere in Kraftfahrzeugen, mit einem Walzendrehschieber, der drehbar in einem Gehäuse angeordnet ist und in einer definierten Drehposition zumindest eine Einlaßleitung verschließt, ist zur Erzielung einer leichten und herstellungstechnisch günstigen Konstruktion mit gezielter Steuerung der Ansaugquerschnitte der Walzendrehschieber rohrförmig ausgebildet und weist an seinem Außenumfang je Einlaßleitung eine Abströmöffnung unterschiedlichen Querschnitts und diametral gegenüberliegend eine gemeinsame Zuströmöffnung auf.

## Beschreibung

Die Erfindung betrifft eine Vorrichtung zum Steuern der Ansaugquerschnitte vom Verbrennungsluft-Einlaßleitungen von Brennkraftmaschinen, insbesondere in Kraftfahrzeugen, gemäß dem Oberbegriff des Patentanspruches 1.

Eine derartige Vorrichtung ist beispielsweise in der EP 0 645 530 A1 beschrieben. Dabei ist in einem Ansaugverteiler ein Walzendrehschieber drehbar und axial verschiebbar gelagert, über den in verschiedenen Drehpositionen kürzere und längere Verbrennungsluft-Einzelleitungen schaltbar und durch axiales Verstellen des Walzendrehschiebers eine Drosselung der Ansaugquerschnitte steuerbar ist.

Aufgabe der Erfindung ist es, eine Vorrichtung der gattungsgemäßen Art vorzuschlagen, mittels der bei einer leichten und herstellungstechnisch günstigen Konstruktion eine verbesserte Steuerung von Verbrennungsluft-Einzelleitungen bei ggf. gezielter Abgasrückführung verwirklichbar ist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß ist der Walzendrehschieber rohrförmig ausgebildet und weist an seinem Außenumfang je Einlaßleitung eine Abströmöffnung unterschiedlichen Querschnitts und diametral gegenüberliegend eine gemeinsame Zuströmöffnung auf. Daraus ergibt sich bei einer leichten und herstellungstechnisch günstigen Konstruktion eine relativ kompromißlose Steuerbarkeit der Verbrennungsluft-Einzelleitungen bei verringertem Herstellungsaufwand aufgrund der gemeinsamen Zuströmöffnung. So ist es problemlos möglich, bei einer Brennkraftmaschine mit drei Einlaßleitungen je Zylinder drei entsprechende Abströmöffnungen unterschiedlichen Querschnitts im Mantel des Walzendrehschiebers auszubilden, beispielsweise mittels Laserschneiden.

Obwohl der Walzendrehschieber unmittelbar im Bereich von Einlaßkanälen im Zylinderkopf einer Brennkraftmaschine angeordnet sein kann, wird bevorzugt vorgeschlagen, diesen in an sich bekannter Weise in einem Ansaugverteiler einer Saugrohranlage für eine Brennkraftmaschine anzuordnen, wobei die Einlaßleitungen im wesentlichen in einer einheitlichen Längsebene in den Ansaugverteiler münden. Daraus resultiert, daß die entsprechenden Abströmöffnungen des Walzendrehschiebers im wesentlichen parallel und über unterschiedliche Umfangswinkel ausgebildet eingearbeitet werden können. Bevorzugt kann dabei eine Verteilerkammer des Ansaugverteilers die Zuströmöffnungen des Walzenschiebers umgeben, wodurch eine gleichmäßige Luftverteilung über den gesamten Last- und Drehzahlbereich der Brennkraftmaschine sichergestellt ist.

Die Abströmöffnungen im Walzendrehschieber können so ausgelegt sein, daß eine erste Verbrennungsluft-Einzelleitung ständig geöffnet ist, eine zweite im mittleren Last- und/oder Drehzahlbereich hinzugeschaltet und schließlich durch Zuschalten der dritten Ausströmöffnung im oberen Lastund/oder Drehzahlbereich der gesamte Querschnitt der drei Einzelleitungen geöffnet ist. Ggf. kann ferner durch axiales Verschieben des Walzendrehschiebers auch der Ansaugquerschnitt der zumindest ersten Einzelleitung steuerbar sein, wodurch eine separate Drosselklappe zur Steuerung der Leistung der Brennkraftmaschine über das Gaspedal entfallen könnte.

In besonders vorteilhafter Weise kann bei einer Brennkraftmaschine mit Abgasrückführung die Abgasrückführleitung axial in den Walzendrehschieber münden oder in diesen hinein verlegt sein, wodurch eine gleichmäßige Abgasrückführung ggf. gezielt in definierte Verbrennungsluft-Einzelleitungen verwirklichbar ist.

Ein Ausführungsbeispiel der Erfindung ist im folgenden mit weiteren Einzelheiten näher erläutert. Die schematische Zeichnung zeigt in
- Fig. 1: einen Querschnitt entlang einer Verbrennungsluft-Einzelleitung einer Vorrichtung zum Steuern der Ansaugquerschnitte mit einem Walzendrehschieber, der in einem Ansaugverteiler einer Saugrohranlage für eine Brennkraftmaschine in einem Kraftfahrzeug angeordnet ist;
- Fig. 2: einen Längsschnitt durch den Ansaugverteiler entlang der Linie II-II der Fig. 1;
- Fig. 3: einen Schnitt entlag der Linie III-III der Fig. 2 durch den Walzendrehschieber im Bereich einer ersten Verbrennungsluft-Einlaßleitung;
- Fig. 4: einen weiteren Schnitt entlang der Linie IV-IV der Fig. 2 durch den Walzendrehschieber im Bereich der zweiten Einlaßleitung;
- Fig. 5: einen Schnitt gemäß Linie V-V der Fig. 2 im Bereich der dritten Einlaßleitung des Walzendrehschiebers; und
- Fig. 6: einen Abschnitt des Walzendrehschiebers im raumbildlicher Darstellung.

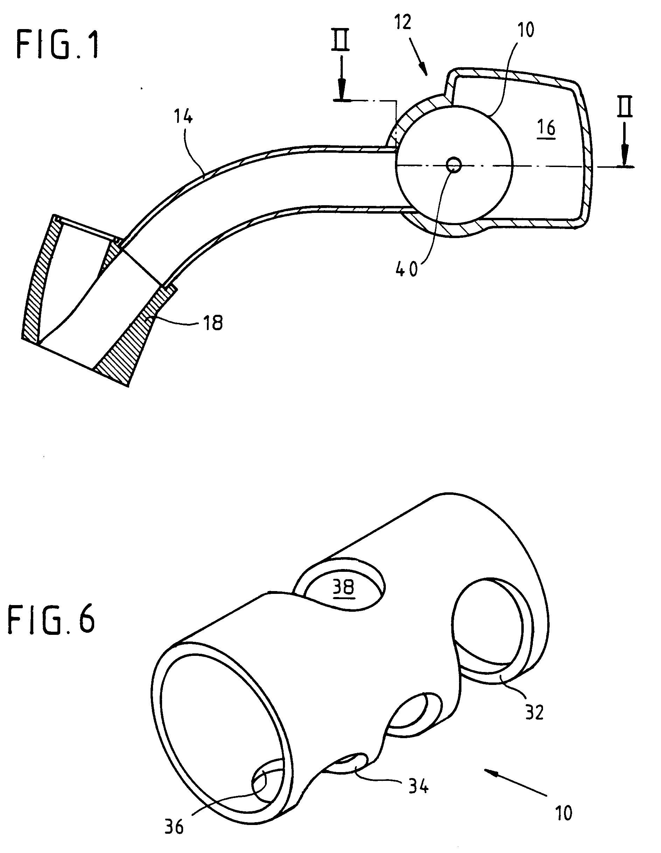

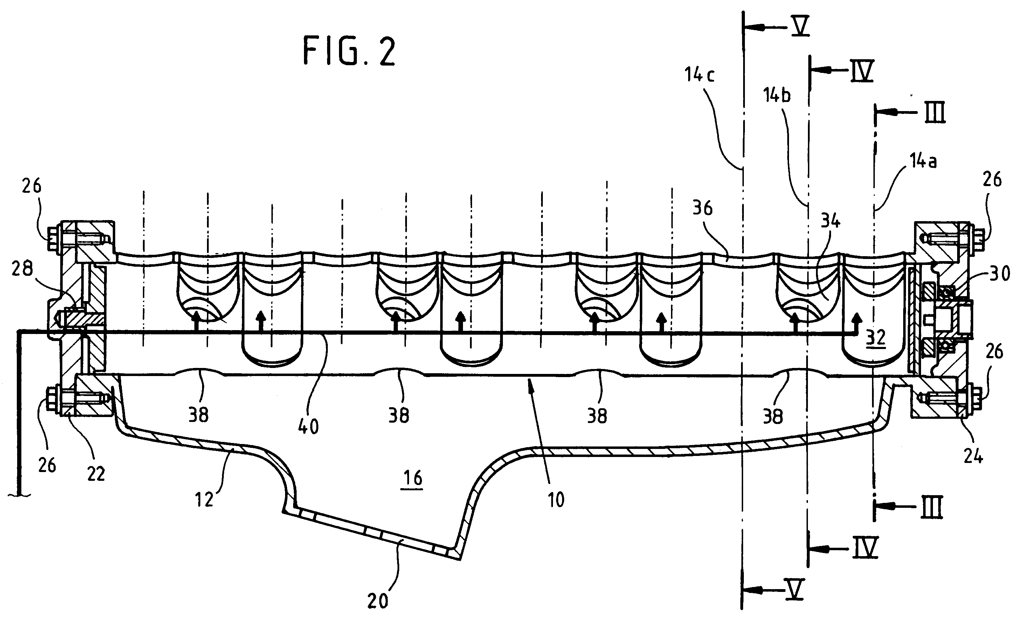

Gemäß den Fig. 1 und 2 setzt sich die Vorrichtung zum Steuern der Ansaugquerschnitte im wesentlichen zusammen aus einem rohrförmigen Walzendrehschieber 10, der drehbar in einem Gehäuse bzw. einem Ansaugverteiler 12 gelagert ist, wobei an dem Ansaugverteiler 12 Verbrennungluft-Einzelleitungen (allgemein mit 14 bezeichnet) in einer einheitlichen Längsebene angeschlossen sind. Über einen sämtliche Einzelleitungen 14 aufnehmenden Anschlußflansch 18 ist die so weit beschriebene Saugrohranlage an den nicht dargestellten Zylinderkopf der Brennkraftmaschine in einem Kraftfahrzeug angebaut, wobei die Einzelleitungen 14 mit den in dem Zylinderkopf ausgebildeten Einlaßkanälen kommunizieren.

Entlang dem Walzendrehschieber 10 ist eine Verteilerkammer 16 vorgesehen, die einen generellen Lufteinlaß 20 aufweist und die einen Umfangsabschnitt des Walzendrehschiebers 10 unter Belassung eines freien Strömungsquerschnittes umschließt.

Der Walzendrehschieber 10 ist in stirnseitigen Deckeln 22,24 über Lager 28,30 drehbar gelagert, wobei die Deckel 22,24 mittels Schrauben 26 an dem Ansaugverteiler 12 befestigt sind.

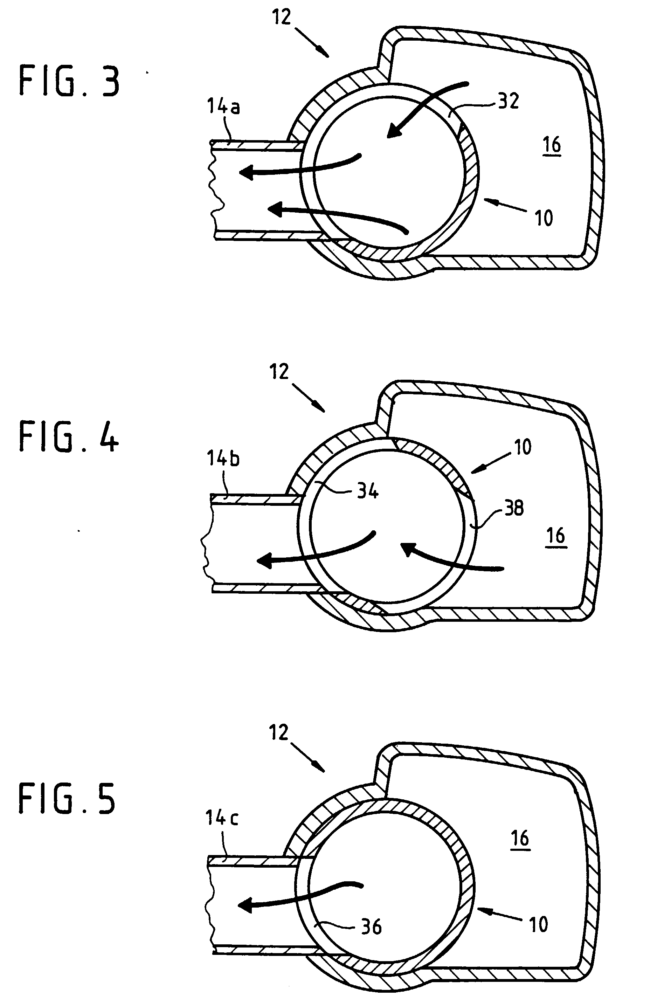

Der Walzendrehschieber 10 weist je Zylinder der Brennkraftmaschine drei Abströmöffnungen 32,34,36 auf, die jeweils eine Verbrennungsluft-Einzelleitung 14a,14b,14c (vgl. Fig. 2, es sind jeweils nur die Mittelachsen der nicht dargestellten Einzelleitungen 14 angezeigt) steuern. Dabei ist die Abströmöffnung 32 über einen derartigen Umfangsbereich des Walzendrehschiebers 10 eingearbeitet, daß sie in jeder der einstellbaren Drehwinkelpositionen des Walzendrehschiebers 10 (vgl. Fig. 3 - 5) die erste Einzelleitung 14a offen hält.

Die Abströmöffnung 34 hingegen, die die zweite Einzelleitung 14b überstreicht, erstreckt sich über einen geringeren Umfangsbereich des Walzendrehschiebers 10 derart, daß die zweite Einzelleitung 14b im Leerlauf der Brennkraftmaschine und in einem unteren Last- und Drehzahlbereich geschlossen, im übrigen Last- und Drehzahlbereich aber geöffnet ist. Schließlich ist die Abströmöffnung 36 nur in einem hohen Last- und/oder Drehzahlbereich, insbesondere bei Vollast, geöffnet, ansonsten jedoch geschlossen. Die Abströmöffnung 36 kann dabei entsprechend dem Mündungsquerschnitt der Einzelleitung 14c ausgebildet sein, z. B. kreisförmig, während die Abströmöffnungen 34 und 32 langlöchförmig gestaltet sind (vgl. Fig. 6).

Etwa diametral gegenüber den Abströmöffnungen 32,34,36 ist je Zylinder der Brennkraftmaschine in dem Walzendrehschieber 10 eine Zuströmöffnung 38 vorgesehen, über die die in die Verteilerkammer 16 einströmende Verbrennungsluft in den Innenumfang des Walzendrehschiebers 10 und von diesem über die Abströmöffnungen 32,34,36 und die Einzelleitungen 14 den Brennräumen der Brennkraftmaschine zugeführt wird.

Die Fig. 3 bis 5 zeigen Querschnitte durch den Walzendrehschieber 10 im Bereich der Abströmöffnung 32 (Fig. 3), im Bereich der Abströmöffnung 34 (Fig. 4) und im Bereich der Abströmöffnung 36 (Fig. 5). Der Walzendrehschieber 10 befindet sich dabei in einer Enddrehposition, die der Vollast der Brennkraftmaschine im hohen Drehzahlbereich entspricht. Es ist ohne weiteres ersichtlich, daß (siehe eingezeichnete Pfeile) in dieser Drehwinkelposition über die Zuströmöffnung 38 alle drei Einzelleitungen 14a,14b und 14c je Zylinder mit Verbrennungsluft versorgt werden, bzw. geöffnet sind.

Es ist ferner ersichtlich, daß durch Verdrehung des Walzendrehschiebers 10 entgegen dem Uhrzeigersinn zunehmend zunächst die dritte Einzelleitung 14c und dann die zweite Einzelleitung 14b zugesteuert und schließlich geschlossen werden, während die Zuströmöffnung 32 zur Verteilerkammer 16 hin offen bleibt. In der nicht dargestellten Enddrehstellung des Walzendrehschiebers 10 für den Leerlauf der Brennkraftmaschine ist lediglich die Einzelleitung 14a noch geöffnet, wobei - sofern der Walzendrehschieber 10 durch entsprechende konstruktive Auslegung auch axial verschiebbar wäre, nunmehr dieser Mündungsquerschnitt ebenfalls verringerbar wäre.

Sofern die Brennkraftmaschine mit einer Abgasrückführeinrichtung versehen ist, über die aus dem Abgassystem der Brennkraftmaschine über ein nicht dargestelltes Abgasrückführventil Abgas zurückgeführt wird, kann über das entsprechende Abgasrückführungsrohr 40 (in der Fig. 2 dargestellt mit der durchgezogenen Linie 40) gezielt in den Bereich der Abströmöffnungen 32,34,36 Abgas rückgeführt werden. Das Abgasrückführungsrohr 40 erstreckt sich dabei etwa zentral (vgl. Fig. 1 und 2) in den Walzendrehschieber 10 hinein, wobei über dessen Längserstreckung entsprechende Ausströmöffnungen vorgesehen sind (vgl. eingezeichnete Pfeile). Es versteht sich, daß das Abgasrückführungsrohr 40 dabei durch eine der Drehlagerungen (28 oder 30) des Walzendrehschiebers 10 hindurch geführt werden muß. Vorteilhaft ist die dabei erzielbare, gleichmäßige Verteilung auf definierte Einzelleitungen 14a,14b und ggf. 14c und die gute Durchmischung des rückgeführten Abgases mit der zugleich einströmenden Verbrennungsluft. Ggf. sind dadurch gezielte Ladungsschichtungen innerhalb der Brennräume der Brennkraftmaschine bei hohen Abgasrückführraten erzielbar.

## Patentansprüche

1. Vorrichtung zum Steuern der Ansaugquerschnitte von Verbrennungsluft-Einlaßleitungen von Brennkraftmaschinen, insbesondere in Kraftfahrzeugen, mit einem Walzendrehschieber, der drehbar in einem Gehäuse angeordnet ist und in einer definierten Drehposition zumindest eine Einlaßleitung verschließt, dadurch gekennzeichnet, daß der Walzendrehschieber (10) rohrförmig ausgebildet ist und an seinem Außenumfang je Einlaßleitung (14) eine Abströmöffnung (32,34,36) unterschiedlichen Querschnitts und diametral gegenüberliegend eine gemeinsame Zuströmöffnung (38) aufweist.

2. Vorrichtung nach Anspruch 1, dadurch gekennzeichnet, daß bei einer Brennkraftmaschine mit drei Einlaßleitungen (14) je Zylinder drei Abströmöffnungen (32,34,36) unterschiedlichen Querschnitts und eine gemeinsame Zuströmöffnung (38) vorgesehen sind.

3. Vorrichtung nach Anspruch 1 oder 2, dadurch gekennzeichnet, daß der Walzendrehschieber (10) in einem Ansaugverteiler (12) einer Saugrohranlage angeordnet ist und daß die Einlaßleitungen (14) im wesentlichen in einer einheitlichen Längsebene in den Ansaugverteiler (16) münden.

4. Vorrichtung nach Anspruch 3, dadurch gekennzeichnet, daß der Ansaugverteiler (16) bei einer mehrzylindrigen Brennkraftmaschine eine zu den Zuströmöffnungen offene Verteilerkammer (16) aufweist.

5. Vorrichtung nach einem oder mehreren der vorhergehenden Ansprüche, dadurch gekennzeichnet, daß eine erste Abströmöffnung (32) des Walzendrehschiebers (10) für eine erste Einzelleitung (14a) je Zylinder ständig offen bleibt.

6. Vorrichtung nach Anspruch 5, dadurch gekennzeichnet, daß eine zweite Abströmöffnung (34) für eine zweite Einzelleitung (14b) im Leerlauf und unteren Last- und/oder Drehzahlbereich der Brennkraftmaschine geschlossen und darüberhinaus geöffnet ist.

7. Vorrichtung nach den Ansprüchen 5 und 6, dadurch gekennzeichnet, daß eine dritte Abströmöffnung (36) je Zylinder nur im oberen Last- und/oder Drehzahlbereich der Brennkraftmaschine geöffnet ist.

8. Vorrichtung nach Anspruch 5, dadurch gekennzeichnet, daß durch axiales Verschieben des Walzendrehschiebers (10) auch der Ansaugquerschnitt der zumindest ersten Einzelleitung (14a) steuerbar ist.

9. Vorrichtung nach einem oder mehreren der Ansprüche 1 - 8, dadurch gekennzeichnet, daß eine Abgasrückführung axial in den Walzendrehschieber (10) hinein erfolgt.

10. Vorrichtung nach Anspruch 9, dadurch gekennzeichnet, daß bei einer mehrzylindrigen Brennkraftmaschine ein axial in den Walzendrehschieber (10) einragendes Rohr (40) mit mehreren, hineinander liegenden Ausströmöffnungen für rückgeführtes Abgas angeordnet ist.
